# EUROPEAN PATENT APPLICATION

(11) **EP 4 160 458 A1**
(43) Date of publication of application: **05.04.2023**
(21) Application number: 21199764.8
(22) Date of filing: 29.09.2021
(51) Int. Cl.: G06F 21/64

(54) **APPROVING MODIFICATIONS OF AN AUTOMATION PROGRAM WITHIN A DISTRIBUTED LEDGER TECHNOLOGY-BASED ECOSYSTEM NETWORK**

(71) Applicant: Siemens Aktiengesellschaft, 80333 München (DE)
(72) Inventor: Heindl, Elisabeth, 90556 Cadolzburg (DE); Müller, Harald, 82229 Seefeld-Hechendorf (DE); Singh, Saurabh Narayan, 81739 München (DE)
(74) Representative: Siemens Patent Attorneys

(57) **Abstract**

The invention relates to a computer implemented method for approving modifications of an automation program within a distributed ledger technology-based ecosystem network and a corresponding distributed ledger-based ecosystem network based on defined rules for trusted modifications.

## Description

The invention relates to a computer implemented method for approving modifications of an automation program within a distributed ledger technology-based ecosystem network and a corresponding distributed ledger-based ecosystem network.

The requirements for automation programs in industrial applications are increasing especially in terms of flexible adaption to flexibly changing applications, for example in lot-size one productions scenarios. Therefore, also the complexity of automation programs is increasing.

To meet these challenges, automation programs are often composed of components or modules or are implemented by several actors from different companies or by different roles. They are moreover often used in different ecosystem setups. Modular applications and their configurations are typically offered in public or company owned marketplaces from where they can be downloaded, adapted and operated.

There is the thread of a lack of control on governance and evolution of the automation programs when so-called third parties extend or specialize the software and deploy it back to the marketplace. It becomes challenging to guarantee the security of composed or extended automation programs and systems in every environment. In such an evolving environment, it also becomes difficult to find out who of all the involved parties caused a potential error and is responsible for a possible damage.

It is known that companies selling automation program products, or a marketplace have a certification process that the software must go through. Those certifications come with manual documentation and review effort. The manual process is time consuming, exhaustive and is prone to human error.

Considering the described drawbacks in the state-of-the-art, it is therefore an objective of this disclosure to provide a method and a system for reliably and trustfully tracking and approving changes in automation programs or components of automation programs.

These objectives are addressed by the subject matter of the independent claims. Advantageous embodiments are proposed in the dependent claims.

The invention relates to a computer implemented method for approving modifications of an automation program within a distributed ledger technology-based ecosystem network of at least provider participants and user participants of the automation program or parts of the automation program, wherein the method comprises defining rules for trusted modifications of the automation program by a governance consortium moderating the ecosystem network; translating the rules into a smart contract; implementing the smart contract in a ledger entry of the ecosystem network; triggering the execution of the smart contract on corresponding nodes of the governance consortium via a trigger message from the automation program, if at least one of the following modification events occurred: a change of a source code of the automation program, a change of a configuration of the automation program, a change of a functionality of the automation program, a newly added deployment environment of the automation program, newly added build tools or changed build pipelines of the automation program, a successful completion of a test or certification of the automation program, and a new deployment of the automation program to a marketplace internally or externally to the ecosystem; creating an assessment, whether there is any violation of the rules; validation of the assessment with a distributed technology-based consensus mechanism within the ecosystem network; approval of the modification event, if the assessment is validated and no violation has been detected.

Modifications of an automation program on the one hand form the basis for flexibly adapting to changing production environments or collaborative software development approaches with multiple contributors and are therefore desirable. On the other hand, they pose a threat as intended or trusted modification might be hard to differentiate from unintended or malicious or erroneous modification. The reasons for unwanted modified automation programs, which should not be accepted or not be deployed or implemented, might lie in a malicious attack or in an accidental defect. To differentiate the desired and necessary modifications from the unwanted ones, specific rules are defined, which have to be fulfilled in order to approve the modifications.

The rules are for example defined based on provisions that are generally applicable in the ecosystem, e.g. certificates or roles, or are based on an analysis of the concrete modifications. Any violation of the rules causes an assessment that the modifications are non-compliant. An approval of the modification cannot be reached if a violation of the rules has been detected. Moreover, an approval is not reached, if no consensus is reached with respect to the assessment within the distributed network. In other words, only if the majority - in number or in influence within the network depending on the consensus mechanism - is convinced that the change is to be approved, then the modification event finally gets its approval.

The ecosystem network is for example a system of participants or stakeholders with respective roles, that interact at least during certain steps within an automation process. The automation process for example is a manufacturing or delivery process of a specific product or service.

The ecosystem for example comprises a plurality of provider participants and user participants of the automation program or parts of the automation program used in the automation process. The ecosystem preferably is flexibly extensible and additional provider or user participants might be added over time to the network.

The network for example is moreover used as communication channel within the system, any suitable channel based on e.g. any suitable internet protocol, is used.

The ecosystem network is based on a distributed ledger technology and enables a decentralized registry, e.g. a distributed database, for example a blockchain database of a blockchain network. The distributed ledger can be assigned for example to a specific complex automation task or to a whole automation plant. Access to the ecosystem, e.g. the blockchain, to check/verify changes can be provided by client programs or agents with small footprint, even from small or embedded devices. Advantageously, the devices that need to check/verify changes do not need to be full blockchain nodes, for example.

The provider and user participants have at least access to a so-called node being part of the distributed ledger network.

Within the ecosystem network, there is a governance consortium moderating the ecosystem network. This governance consortium has the special task to sign on a smart contract. The governance consortium participants run a node of the ecosystem network.

A smart contract generally implements automated rules to generate an output with respect to input. The smart contract of the governance consortium nodes implements the rules for trusted modifications.

Therefore, all governance consortium nodes have to agree on the smart contract. A smart contract is for example proposed, checked by the nodes and an indorsement is successful if a sufficient number of governance consortium nodes, which is required according to a rule in the smart contract, accepts the smart contract.

The smart contract has to be initially presented to the ecosystem network and preferably is provided by any node, e.g. one of the governance consortium nodes, so that it is available as ledger entry in the distributed database. The smart contract in particular is unique for every distributed ledger.

With the smart contract being in place and active in the ecosystem, it is executed by the respective nodes - e.g. all nodes of the governance consortium per default - each time a trigger message is received from the automation program. The trigger messages are generated by the automation program and are accessible for the nodes. The nodes intended for executing the smart contract listen for these trigger messages and start execution of the smart contract if a trigger message is received. The smart contract is either triggered automatically via script of the smart contract or manually by an actor running the node.

With the proposed method and ecosystem network, modification of an automation program can be approved in a secure and reliable manner without the need of a central trusted authority checking the modifications. The asset to be protected in the distributed-ledger-based ecosystem is an automation program subject to change. Therefore, allowed or trusted changes are defined, and the automation program is examined for unexpected or unwanted changes.

Especially for composed software programs, the proposed method and ecosystem network offers a solution to handle and use the corresponding automation programs in a secure manner. Moreover, it enables to find parties or participants, who are responsible for an error or an untrustful modification and therefore eventually also responsible for potential damage. Preferably, any damage is prevented as the execution of modified automation programs is prevented automatically if no approval has been obtained.

In an advantageous manner, also all the modifications that lead to an approval, are tracked and recorded as steps in the software lifecycle of the automation program. At any time, participants operating its own node within the ecosystem can trace all changes back to the origin. Participants, who do not run a node themselves, are able to get that information from a node e.g. of the governance consortium.

According to an embodiment, the ecosystem further comprises governance consortium participants for moderating the ecosystem. The governance consortium participants can be provider or user participants at the same time or can be separate participants with their own specific nodes, that only have the functionality of moderating the ecosystem and in particular executing the smart contract.

According to an embodiment, the ecosystem network is a blockchain network. In an advantageous manner, transaction blocks are used to publish the modification within the ecosystem. Also, a block is used to publish the smart contract proposal at the beginning of the network. Software updates are version tagged and via a blockchain, an audit trail can be observed to identify the changes proposed. For example, every block in the chain is assigned to a specific version of the software. Changes in the software or the configuration lead to an inevitable version increase (major or minor) based on a unique parent version. Advantageously, only meta information is secured via the described mechanism and not the source code or artifacts themselves. This keeps the resulting blockchain small.

According to an embodiment, the ecosystem network is a private permissioned network, in particular a private permissioned blockchain. In industrial automation environments, this is a feasible way that enables to keep the extend of the network small on the one hand and to still rely on a decentralized trust mechanism. Also, public permissioned networks might be used. Advantageously, then a given infrastructure can be used. Public blockchains might also be advantageously used in the context of open-source requirements.

According to an embodiment, the automation program is an automation program component of a modular automation program. The more components from different providers, the more has the program to be secured against unintended or non-compatible changes.

According to an embodiment, the smart contract is integrated in a genesis block of the blockchain. This is advantageous if the network is started and the approval mechanism has to be in place from the very beginning. Otherwise, the smart contract can be published with any transaction and can be indorsed according to the general rules in the ecosystem network.

According to an embodiment, the defined rules for trusted modifications of the automation program comprise at least one of: a check for a trustful origin of the modified automation program, a check for threads of the modified automation program via automated test tools, a check for authorization for the modification depending on a role of an automation program provider or system integrator, a check for a certification of a deployment environment for a specific product, a check for deviations between predefined values and values logged by the automation program or the provider of the automation program, and a check for consistency with previous approved changes.

Trustful origins are for example defined via companies, e.g. Docker Hub or GitHub, that are listed in the smart contract or a library that the nodes executing the smart contract accesses. Roles of provider participants are for example listed in the same way. The certification of a deployment environment might be checked according to a predefined version of an industrial edge ecosystem for a specific edge app. Via the predefined values, specific characteristics of the automation program, that are known and expected a priori and that can be extracted out of the modified program code, can be examined.

The assessment, whether there is any violation of the rules, is configured dependent on the rule. For example, the assessment is a yes/no result. In other embodiments, the assessment is a likelihood for a trusted modification. In further embodiments, the assessment is done manually by an operator based on a result, presented in raw-data format or in a processed form, that the smart contract delivers. For example, a range of a value is delivered and has to be compared with predefined values or ranges of values.

The assessment is created by all the participating nodes and with a distributed technology-based consensus mechanism, an agreement on the changes of a majority of the nodes can be reached. The specific consensus mechanism, that leads to a valid transaction in the ecosystem network, are preferably also specified in the smart contract.

If the majority agrees on the changes, the modified automation program or part thereof is approved or accepted and can be further used, e.g. directly by a user participant or by a further provider participant, who again as third party modifies the code, e.g. to add further functionality. Moreover, the approved program code can be further processed by a system integrator participant.

According to an embodiment, the smart contract based on the defined and translated rules starts a certified build pipeline and assesses the result. For example, an appropriate tool like Polarion is used and the outcome checked for success. With this, a fully automated test of the modified software including an assessment is performed.

According to an embodiment, the rules can be updated or changed by the governance consortium via the smart contract. The rules in the smart contract can be updated jointly, if proposed by the stakeholders. For example, one of the stakeholders proposes a change in the governance rules. All other stakeholders vote on it and if the rule is accepted, it becomes part of the smart contract and a new version is rolled out. Else, the rule is rejected. With this mechanism, the approval mechanism can be kept up to date and is flexibly adaptable to changing participants or requirements of the environment the automation program is used in.

According to an embodiment, if one of the modification events occurred, all defined rules are assessed. Although it is not necessary to implement all the rules described above, the more automated the smart contract can be performed, the more aspects of modifications that may occur are checked and the safer the program code and its usage is.

According to an embodiment, after the approval of the modification event, the software of the modified automation program is rolled out. For example, every time an update on the software is suggested, the smart contract checks for all or a sub-part of the rules available. If the update is approved, the new version of the software is rolled out, and the changes are logged via the distributed network.

According to an embodiment, an updated software of a proposed modified automation program is version tagged and the proposed modifications are logged in an audit trail. Advantageously, in case of an error or discrepancy, the software causing the error is identified, from the ledger entries, a lookup is performed to trace which version of software was still working fine and via the audit trail, the change which caused the error can be tracked successfully. The stakeholders therefore can arrive at a consensus regarding cause of error, the change and the actor which initiated the change.

In a further embodiment, the deployed software version is protected with a private key and can be unlocked with a public key stored preferably also in the distributed ledger or is available from a vendor participant's cryptographic signature.

The proposed decentralized governance mechanism allows consensus-based tracking of changes of an automation program or part thereof and an efficient identification of source of error without need for a trusted party. The audit trail of changes makes it easier for a certification or auditing authority to make sure that the changes were indeed created by a certain actor. This has an added guarantee as every change is signed by the consortia of governing nodes. A certification or auditing authority might be a temporary participant in the network for example for auditing reasons only.

According to an embodiment, in case no approval of the modification event is reached, the provider or automation program component or modification causing the violation is identified. Measures to either inform the provider for correction purposes or suspend it for further activities can be initiated.

The invention moreover relates to a distributed ledger-based ecosystem network comprising at least one provider participant, wherein the provider participant provides an automation program or a component of an automation program, at least one user participant, wherein the user participant uses the automation program or the component of the automation program, and several governance consortium participants moderating the ecosystem network, wherein the governance consortium participants are configured to define rules for trusted modifications of the automation program; wherein the ecosystem network is configured to implement a smart contract secured in a ledger entry and comprising the translated rules; wherein corresponding nodes of the governance consortium participants are configured to trigger the execution of the smart contract on the corresponding nodes via a trigger message from the automation program, if at least one of the following modification events occurred: a change of a source code of the automation program, a change of a configuration of the automation program, a change of a functionality of the automation program, a newly added deployment environment of the automation program, newly added build tools or changed build pipelines of the automation program, a successful completion of a test or certification of the automation program, and an initial deployment of the automation program to a marketplace internally or externally to the ecosystem; wherein the corresponding nodes of the governance consortium are further configured to create an assessment, whether there is any violation of the rules; wherein the ecosystem network is configured to validate the assessment based on a distributed technology-based consensus mechanism among the governance consortium and to approve the modification event, if the assessment is validated and no violation has been detected.

The participants are connected in the distributed ledger-based ecosystem network, for example building a communication network. The participants either build a node of the ecosystem network, including any suitable hardware, or interact as client of an existing node of the network. The participants interact with a processor performing the steps described above. As used herein, the term "participant" is intended to encompass hardware, software, or a combination of hardware and software, moreover dedicated to a corresponding role within the ecosystem. A processor corresponds to any electronic device that is configured via hardware circuits, software, and/or firmware to process data. For example, processors described herein may correspond to one or more (or a combination) of a microprocessor, CPU, FPGA, ASIC, or any other integrated circuit (IC) or other type of circuit that is capable of processing data in a data processing system, which may have the form of a controller board, computer, server, mobile phone, and/or any other type of electronic device.

Further possible implementations or alternative solutions of the invention also encompass combinations - that are not explicitly mentioned herein - of features described above or below with regard to the embodiments. The person skilled in the art may also add individual or isolated aspects and features to the most basic form of the invention.

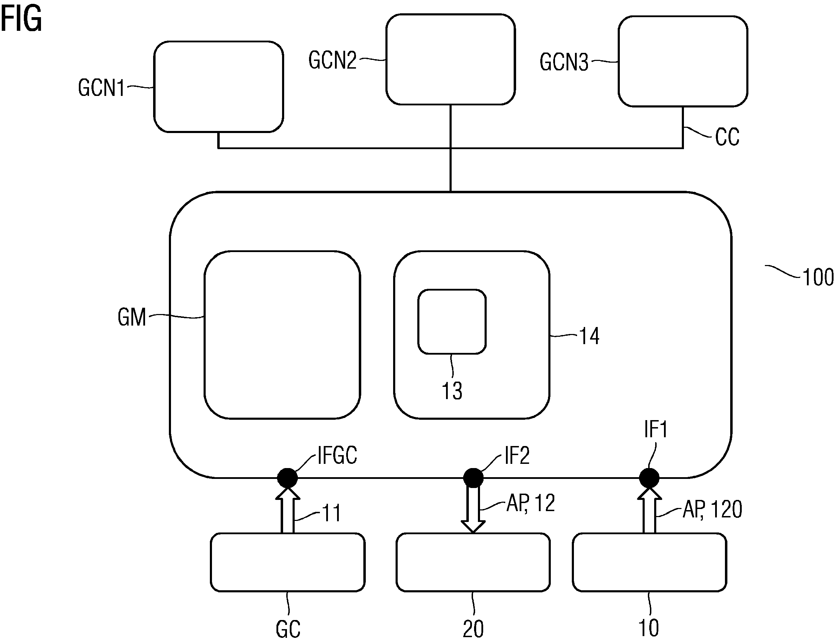

In the following different aspects of the present invention are described in more detail with reference to the accompanying figure. The figure shows a schematic representation of an ecosystem network according to an embodiment of the invention.

A private permissioned blockchain network 100 it configured to have interfaces IF1, IF2, IFGC to automation program providers 10, automation program users 20 and governance consortium actors GC within the ecosystem 100. Via the interfaces, the respective participants have the opportunity to interact with the blockchain in terms of getting information about transactions published in the network and also the validation of transactions. The most recent and validated blockchain version can be accessed. Moreover, via the interfaces the asset to be protected by the ecosystem, an automation program code AP and its modifications 120 can be provided to the ecosystem and an automation program code AP and its trusted modifications 12 can be obtained from the ecosystem.

The communication within the ecosystem network is realized with a communication channel CC, e.g. by using peer to peer gossip protocols.

The most basic general conditions that should apply for the network are set by the governance consortium actors GC, which form for example an association of an independent supervisory instance and stakeholders of the participating types of actors like vendors, program users, system integrators etc. This is for example laid down and documented in a governance mechanism GM. These conditions are added in a genesis block 14, in particular as part of the smart contract 13.

Part of the general conditions are in particular the definition of validation mechanisms that apply in the ecosystem network, e.g. conditions for a valid transaction, validating nodes etc. Moreover, onboarding conditions for new participants can be defined.

Key part of the embodiment is a smart contract 13, which has been added to a ledger entry, in particular the genesis block 14 of the blockchain network. The smart contract 13 comprises rules 11 for an automated logging and verification of automation program code AP received including modifications 120. The smart contract 13 comprises these rules 11 in a translated format. The rules 11 have been defined and agreed on by the governance consortium GC.

For executing the smart contract 13, the governance consortium nodes GCN1, GCN2, GCN3 listen for trigger message that are part of automation program code AP which has undergone a modification 120. If a modification event has occurred by an automation program provider, e.g. because the program code has been extended to add a functionality especially for a context, in which the automation program is to be used later on, then the execution of the smart contract starts in all nodes GCN1, GCN2, GCN3 according to the conditions defined by the governance consortium GC. In particular, all governance consortia nodes have to execute the smart contract. Especially, modifications of the source code, configuration or functionality of the automation program are of interest and trigger the smart contract 13. But also the intended usage of the program code, including deployment or used build tools, or certifications required for the automation program may be of interest.

Whereas the modification events are generated and controlled outside the blockchain, the subsequent assessment of the modification based on the rules is blockchain-internal. All rules 11 available in the ecosystem might be checked for violations by default or the rules to be checked might be chosen according to the modification event. This can be realized if an information about the type of modification event is transmitted to the blockchain network together with the trigger message.

If all rules 11 relevant and intended to be checked according to the modification 120 of the automation program code AP have been checked by a governance consortium node GC1 for violations and no violation has been detected, then the node GC1 creates for example a negative assessment result, indicating that no violation is detected. All contributing nodes do the same assessment and based on the consensus mechanism defined by the governance consortium, single assessments of governance consortium nodes are validated or not. If an assessment is negative and validated, then the modification 120 is approved. The automation program component code AP can be used by a user, for example an automation plant operator, including the trusted modification 12 in a secure manner.

In an analogous way, for positive assessments by a node GCN1, indicating the violation of one or more of the rules 11, also a validation is performed to accept the assessment according to the consensus as contracted. If the blockchain network agrees on the positive assessment, the modification is not approved and further measures to investigate the positive assessment can be triggered.

Although the present invention has been described in accordance with preferred embodiments, it is obvious for the person skilled in the art that modifications are possible in all embodiments.

The invention relates to a computer implemented method for approving modifications of an automation program within a distributed ledger technology-based ecosystem network and a corresponding distributed ledger-based ecosystem network based on defined rules for trusted modifications.

## Claims

1. Computer implemented method for approving modifications (120) of an automation program (AP) within a distributed ledger technology-based ecosystem network (100) of at least provider participants (10) and user participants (20) of the automation program (AP) or parts (M) of the automation program (AP),
wherein the method comprises:
- defining rules (11) for trusted modifications (12) of the automation program (AP) by a governance consortium (GC) moderating the ecosystem network (100);
- translating the rules (11) into a smart contract (13);
- implementing the smart contract (13) in a ledger entry (14) of the ecosystem network (100);
- triggering the execution of the smart contract (13) on corresponding nodes of the governance consortium via a trigger message from the automation program, if at least one of the following modification events occurred:
- a change of a source code of the automation program,
- a change of a configuration of the automation program,
- a change of a functionality of the automation program,
- a newly added deployment environment of the automation program,
- newly added build tools or changed build pipelines of the automation program,
- a successful completion of a test or certification of the automation program,
- a new deployment of the automation program to a marketplace internally or externally to the ecosystem;
- creating an assessment (15), whether there is any violation of the rules (11);
- validation of the assessment (15) with a distributed technology-based consensus mechanism within the ecosystem network (100);
- approval of the modification (120), if the assessment (15) is validated and no violation has been detected.

2. Method according to claim 1, wherein the ecosystem further comprises governance consortium participants (30) for moderating the ecosystem.

3. Method according to claim 1 or 2, wherein the ecosystem network is a blockchain network.

4. Method according to one of the preceding claims, wherein the ecosystem network is a private permissioned network.

5. Method according to one of the preceding claims, wherein the automation program is an automation program component of a modular automation program.

6. Method according to claim 3, wherein the smart contract (13) is integrated in a genesis block of the blockchain.

7. Method according to one of the preceding claims, wherein the defined rules (11) for trusted modifications (12) of the automation program (AP) comprise at least one of:
- a check for a trustful origin of the modified automation program,
- a check for threads of the modified automation program via automated test tools,
- a check for authorization for the modification depending on a role of an automation program provider or system integrator,
- a check for a certification of a deployment environment for a specific product,
- a check for deviations between predefined values and values logged by the automation program or the provider of the automation program
- a check for consistency with previous approved changes.

8. Method according to one of the preceding claims, wherein the smart contract based on the defined and translated rules starts a certified build pipeline and assesses the result.

9. Method according to one of the preceding claims, wherein the rules can be updated or changed by the governance consortium (GC) via the smart contract (13).

10. Method according to one of the preceding claims, wherein if one of the modification events occurred, all defined rules are assessed.

11. Method according to one of the preceding claims, wherein after the approval of the modification event, the software of the modified automation program is rolled out.

12. Method according to one of the preceding claims, wherein an updated software of a proposed modified automation program is version tagged and the proposed modifications are logged in an audit trail.

13. Method according to claim 12, wherein in case no approval of the modification event is reached, the provider or automation program component or modification causing the violation is identified.

14. Distributed ledger-based ecosystem network (100) comprising at least one provider participant (10), wherein the provider participant (10) provides an automation program (AP) or a component of an automation program (AP), at least one user participant (20), wherein the user participant (20) uses the automation program (AP) or the component of the automation program (AP), and several governance consortium participants (GC) moderating the ecosystem network (100), wherein the governance consortium participants (GC) are configured to define rules (11) for trusted modifications (12) of the automation program (AP);
- wherein the ecosystem network is configured to implement a smart contract (13) secured in a ledger entry (14) and comprising the translated rules (11);
- wherein corresponding nodes (GCN1, GCN2, GCN3,...) of the governance consortium participants are configured to trigger the execution of the smart contract (13) on the corresponding nodes via a trigger message from the automation program (AP), if at least one of the following modification events occurred:
- a change of a source code of the automation program (AP),
- a change of a configuration of the automation program (AP),
- a change of a functionality of the automation program (AP),
- a newly added deployment environment of the automation program (AP),
- newly added build tools or changed build pipelines of the automation program (AP),
- a successful completion of a test or certification of the automation program (AP),
- an initial deployment of the automation program (AP) to a marketplace internally or externally to the ecosystem,
- wherein the corresponding nodes (GCN1, GCN2, GCN3,...) of the governance consortium are further configured to create an assessment (15), whether there is any violation of the rules (11) ;
- wherein the ecosystem network (100) is configured to validate the assessment (15) based on a distributed technology-based consensus mechanism among the governance consortium (GC) and to approve the modification (120), if the assessment is validated and no violation has been detected.
